# EUROPEAN PATENT SPECIFICATION

(11) **EP 1 297 451 B1**
(45) Date of publication and mention of the grant of the patent: **17.10.2012**
(21) Application number: 01931756.9
(22) Date of filing: 03.05.2001
(51) Int. Cl.: G06F 17/30

(54) **SERVICE PROVISION IN A COMMUNICATIONS NETWORK**
DIENSTBEREITSTELLUNG IN EINEM KOMMUNIKATIONSNETZ
PRESTATIONS DE SERVICES DANS UN RESEAU DE COMMUNICATIONS

(30) Priority: 06.06.2000 FI 20001352
(43) Date of publication of application: 02.04.2003
(73) Proprietor: TeliaSonera Finland Oyj, 00510 Helsinki (FI)
(72) Inventor: KATAIKKO, Mika, FIN-53850 Lappeenranta (FI); SIITONEN, Tommi, FIN-53850 Lappeenranta (FI); NISSINEN, Ilkka, FIN-53850 Lappeenranta (FI)
(74) Representative: Pursiainen, Timo Pekka
(86) International application number: PCT/FI2001/000424
(87) International publication number: WO 2001/095145

(56) References cited:
- WO-A1-99/53676
- US-A- 5 895 466

## Description

### Field of the invention

The invention relates generally to the provision of services in a communications network. More specifically, the invention relates to a method and a system for providing services which the users of the network can access by sending service requests in natural language.

### Background of the Invention

Relevant background art is disclosed in US 5895466, US 5913214 and WO 99/53676. The US 5895466 discloses a customer service system including a natural language device, a remote device remotely coupled to the natural language device over a network and a database coupled to the natural language device. WO 99/53676 discloses a method of using a natural language query to retrieve information from a data source and further performing a requested action using the retrieved information. US 5913214 discloses a system for querying disparate, heterogeneous data sources over a network.

The strong growth in the number of Internet users and services provided through the internet has been one of the most remarkable phenomena in communications in recent years. Another current trend is the strongly increasing use of various mobile terminals, such as laptops, PDA (Personal Digital Assistant) equipment, and intelligent telephones.

These two rapidly evolving network technologies, wireless communication and the internet, are gradually converging to make the packet switched data services used in the Internet available to mobile users. As increasingly complex systems and services appear in the market, the need for more user-friendly man-machine interfaces is becoming more crucial for the efficient utilization of the services.

At present, most man-machine interfaces are relatively complicated and difficult to use. In typical mobile services, for example, the user has to remember the semantics and the syntax required by the service interface. The error tolerance of these systems is poor; even minor spelling errors, for example, hamper the use of the service. It is therefore desirable that the user could express the command or query as naturally as possible, i.e. using natural language.

To overcome this problem, natural language interfaces, allowing the user to express his or her intentions in natural language, have been introduced into the market. A known web site letting the users search the Internet in plain English is the Ask Jeeves service (available at www.askjeeves.com). This service is based on a combination of a natural language interpretation and a proprietary knowledge base. The precise nature of the question is first analyzed using both semantic and syntactic processing, and then answers are searched from the knowledgebase containing information about the most frequently asked questions.

Another known system based on the interpretation of natural lan guage is disclosed in the International Patent Application WO 99/66381, which discloses an adaptive agent-oriented software architecture for man-machine interfaces. In this system, the natural language message is input to a network of software agents. One or more of the agents act as input agents receiving the natural language message. The different agents in the network are "hyper-connected" with each other in the sense that they receive queries and commands only from a predetermined subset of other agents in the network, and transmit queries and commands only to another subset of agents in the network.

A major drawback in the present systems based on natural language interpretation is that the interpretation of the user input is closely tied to the implementation of the rest of the system. In other words, the interpretation is made only for the service provided by the rest of the system. Therefore, a service provider offering a wide variety of services within a single service framework has not been able to utilize natural language interpretation efficiently for providing the services.

It is an objective of the invention to obtain a solution by means of which it is possible to eliminate the drawbacks described above and to bring about a solution enabling not only an uncomplicated use of a wide variety of different services but also an efficient provision of new services and service combinations.

### Summary of the Invention

This and other objectives of the invention are accomplished in accordance with the principles of the present invention by providing a system in which the user can access a wide array of services by supplying service requests in natural language. The idea of the invention is to separate the natural language interpretation from the service implementation and execution by utilizing an intermediate layer which first generates a generic format service description out of the user input and then parses this description into information indicating the service calls to be made and the parameters relating to the said calls. This information is returned to a service logic component which then implements the service in a manner known as such by making the said service calls. Thus, the natural language input is first converted into a service description which describes the service functionalities required by the natural language message. This service description is output in a generalized markup language. The description is then parsed into elements which identify the operations (such as service calls) to be performed and the parameters relating to these operations, whereby the service can be provided in a conventional manner.

In this way natural language interpretation can be used in service provision in an efficient way so that not only a wide variety of services but also arbitrary combinations of services can be provided in response to a user input. Thus, the user can obtain a wide variety of new and existing services without having to remember the semantics and the syntax required by each service interface. A service provider offering a variety of separate services can in this way offer new services by combining the services in a manner determined by the input message from the user.

### Brief Description of the Drawings

In the following, the invention and its preferred embodiments are described more closely referring to the examples shown in Figures 1 to 7 in the appended drawings, wherein:
Figure 1 illustrates the general architecture of the system according to the present invention,
Figure 2 illustrates a service request message which the user inputs from his or her terminal,
Figure 3 illustrates an example of message transfer between the elements of the system in response to a service request of Figure 2,
Figure 4 illustrates the functional structure of the natural language interpreter according to the present invention,
Figure 5 illustrates an example of the output from the natural language interpreter,
Figure 6 is a flow diagram describing the operation of the XML parser, and
Figure 7 illustrates the operation of the service logic component in providing the service in response to the output from the XML parser.

### Detailed Description of the Invention

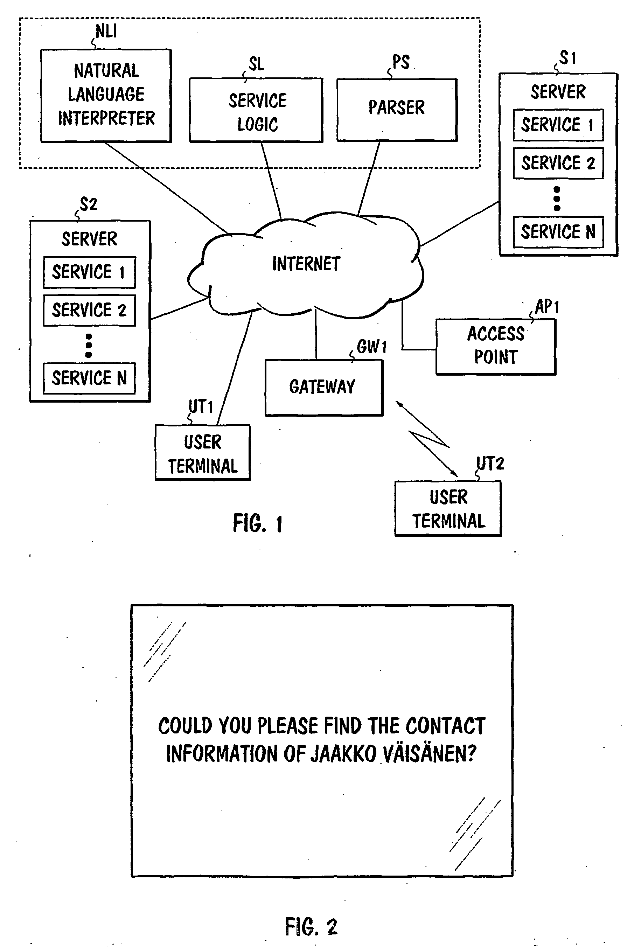

Figure 1 shows the architecture of the general system according to the present invention. The system includes several servers providing services to the users of the system. Two of these servers (S1 and S2) have been shown in the figure. The servers offer a broad array of resources and services for the users of the network, and the servers can be owned by one or more service providers. In this example, all the servers are nodes of the Internet or an Intranet network (or an equivalent TCP/IP network). In this context the term "service" refers to a service application residing in a server. Below, the set of servers providing the services is also called the service framework.

User terminals (UT1 and UT2) have access to the servers providing the services in a manner known as such. The user terminals can be fixed terminals, as shown in conjunction with terminal UT1, or mobile terminals that have wireless access to the system or to the network, as shown in conjunction with terminal UT2. Wireless access can be implemented through various access points (AP1) or alternatively through gateways (GW1) that translate the requests from the protocol used between the terminal and the gateway, such as WAP, to the protocol used between the gateway and the server, i.e. to HTTP.

In terms of the inventive idea, the types of the user terminals and the connections between the user terminals and the servers providing the services are not of significance. In this context the only essential feature of the terminals is that they are provided with browsers or other known client software by means of which they can communicate with the service providing servers of the network.

The system further comprises a service logic component SL, a natural language interpreter NLI and a parser PS. These three units together form the core of the system according to the present invention. By means of this core, the users can use the services within the service framework efficiently by supplying natural language service requests. The service logic component receives the service requests from the user terminals, forwards the requests to the natural language interpreter, receives the results of the interpretation from the interpreter, and forwards the results to the parser for further processing. Furthermore, the service logic component receives the results of the parsing from the parser and, in response to them, executes the objects that make the calls to the desired services within the service framework. The service logic component thus acts like a hub first coordinating the interpretation and the parsing of the service request, and then implementing the service by means of the parsed results. The natural language interpreter interprets the natural language input from the user and converts the interpreted results into a generic format service description which describes the service functionality required to fulfill the user's request.

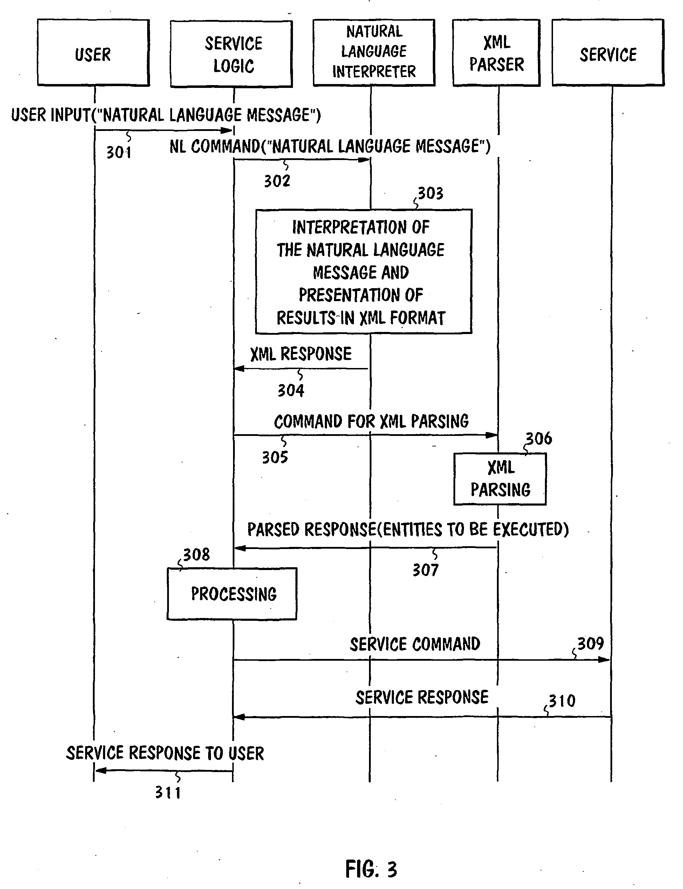

Figure 3 illustrates an example of message transfer between the elements of the system when the user uses a service residing within the service framework. In this context, a service which provides contact information is used as an example illustrating the service provision according to the present invention.

First, the user gives the input command or message in natural language by keying in or otherwise supplying the desired command or message from his or her terminal. Figure 2 illustrates an example of a message that the user could supply at his or her terminal for finding the contact information of a certain person (i.e. Jaakko Väisänen). The user then sends this message to the service logic SL (step 301 in Figure 3) which forwards the message to the natural language interpreter NLI (step 302). The interpreter analyzes the natural language message input by the user (step 303) and outputs a service description in generalized markup language, preferably in XML format. XML (eXtensible Markup Language) is a standardized language designed to facilitate representation and use of structured documents and data in the Web. The interpretation as such is performed in a known manner. The generic format service description includes the names of the service functionalities that are needed to fulfill the user's request, and the parameters (supplied by the user) which the said functionalities require. The service description is then returned to the service logic at step 304. Overall, the service description is specified as an XML application.

The service logic then sends the parser, which is now an XML parser, a request for parsing the XML description received from the interpreter (step 305). The request includes the XML format string received from the interpreter. The parser analyzes the string, and, based on the identities found in the string, instantiates the classes that correspond to the identities found. The instances created are called objects, as is common in the field of object-oriented programming. The objects include the program code corresponding to the functionalities specified in the XML description (step 306). In this example, the parser finds in the XML description the name of the functionality which describes the function of retrieving contact information from a database (step 306). The parser then returns the corresponding objects to the service logic at step 307. The service logic stores the objects in the order corresponding to the order of execution of the said functionalities. An object providing a certain service functionality typically includes sending of a service request to the server providing the service in question (step 309) and generating a response to the user from the service results to be returned to the user (step 311). The service logic executes one object at a time at step 308. Figure 3 illustrates the execution of one object only, i.e. Figure 3 shows one service request/response pair only.

The parser thus instantiates the classes implementing the functionalities indicated by the XML description. These instances (i.e. objects) are returned to the service logic SL which then executes the functionalities by calling the objects in the correct order.

The operation of the service provision is disclosed below in more detail by disclosing the individual elements of the system.

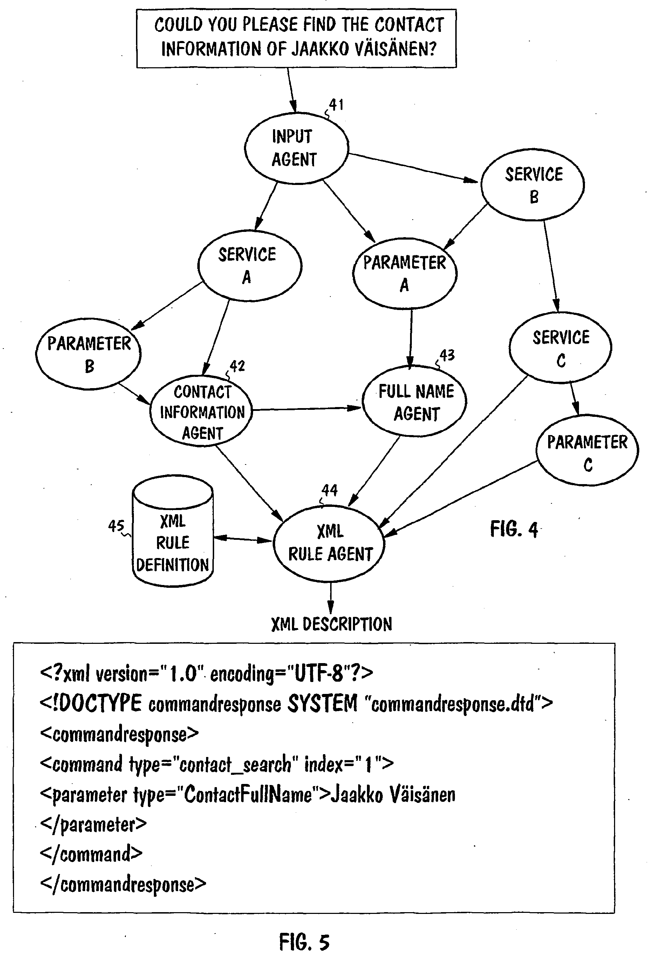

Figure 4 illustrates the functional structure of the natural language interpreter. The interpreter comprises a network of agents or agent communities. In the figure, each oval represents an agent. The natural language message from the user is supplied to an input agent 41, the message being in this example similar to the one shown in Figure 2. The different agents in the network are connected with each other so that an individual agent receives queries or commands only from a predetermined subset of other agents and transmits queries or commands only to another subset of agents. Each agent has a domain of responsibility in interpreting the natural language message. Each functionality (i.e. each service) provided by the system is assigned an agent responsible for that service, and each agent is preferably responsible for one service only. Moreover, part of the agents are responsible for interpreting the parameters required by the services. For example, one of the agents is a contact information agent (42) responsible for the contact information service taken as an example of the services. This agent receives all the messages with words referring to contact information service, such as the words "contact information", "telephone number", etc. Further, one of the agents can be a full name agent (43) which is responsible for the parameters required by the contact information service and thus receives and processes the names of the persons whose contact information is to be searched.

The network of agents can be implemented similarly as described in the above-mentioned International Patent Application WO 99/66381, wherefore the implementation of the agents is not discussed in more detail here. In addition to the implementation described in the said WO publication, the individual agents have been designed to generate an XML format description of the interpretation result. Thus, the contact information agent generates XML items indicating that the functionality in question is contact information service and the full name agent generates XML format parameters on the basis of the name of the person whose contact information is to be searched for. All generated XML description elements are forwarded to an XML rule agent 44 which has an associated XML rule definition. Using this definition, the XML rule agent sets the generated elements in the correct order so that an XML description of the desired service is obtained. This description has thus been generated on the basis of the natural language input supplied by the user.

Instead of a network of software agents other solutions can be used for the interpretation. The architecture of the system does not set any requirements for the structure of the interpreter, except that the output is in generalized markup language, preferably in XML.

Figure 5 illustrates an example of the XML description obtained as a result of the user input according to Figures 2 and 4. In Figure 5, the first row contains the XML declaration and the second row the document type declaration. The third row includes the root element which contains all other elements of the document. As commonly known, each element comprises a start tag, an end tag and the content between the tags. The fourth row indicates that the name of the functionality in question is "contact_search", the row being generated by the contact information agent in Figure 4. The fifth row indicates that the functionality has an associated parameter whose name is "ContactFullName" and whose value is in this case "Jaakko Väisänen". This row has been generated by the full name agent in Figure 4.

Thus, at this stage the natural language interpreter has interpreted the original natural language message so that the functionality involved is "contact_search", which is the contact information service within the system, and that the piece of contact information to be searched for is the one where the parameter "ContactFullName" has the value "Jaakko Väisänen". The interpreted results are in generic XML format, as shown in Figure 5.

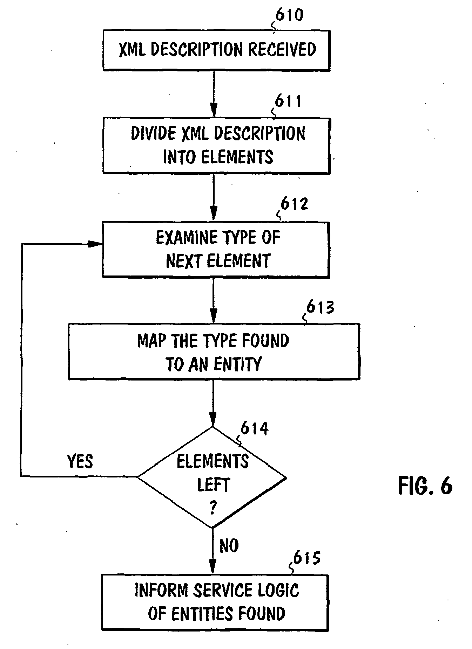

Figure 6 is a flow diagram illustrating the operation of the XML parser. The parser first receives the XML format service description, such as the description according to Figure 5, from the service logic component (step 610). The parser then divides the received string into XML elements (step 612) according to the tags within the string, i.e. tags separate the string into the elements. One element comprises the items between the command type tag (<command...>) and the following command ending tag (</command>). Thus, in the example of Figure 5 the parser finds only one element which includes the items from the fourth row to the seventh row.

The elements, which include the names of the functionalities and the values of the associated parameters, are then parsed and the type of each element is examined at step 612, one element at a time. Having determined the type of the first element, the parser instantiates the class corresponding to the type found (step 613). Thus, at this step the parser maps the XML format description to a class representing a service implementation which can be executed by the service logic component. For this purpose, the parser can use any mapping method provided by the development environment (e.g. reflection in Java). Each mapped type attribute of the XML element is a class and each type attribute corresponds to one class. A class corresponds to one functionality. The parser creates an instance from each class found on the basis of the type attributes. As mentioned above, the instances of the classes are here called objects.

After this, the parser checks whether there are elements left in the parsed XML string (step 614). In the affirmative case, the process returns to step 612 to examine the type of the next element. When the classes corresponding to all types found have been instantiated, the parser sends the parsing results to the service logic SL (step 615). The parsing results include the objects which correspond to the functionalities described in the XML description. These objects further include the parameter values associated with each functionality.

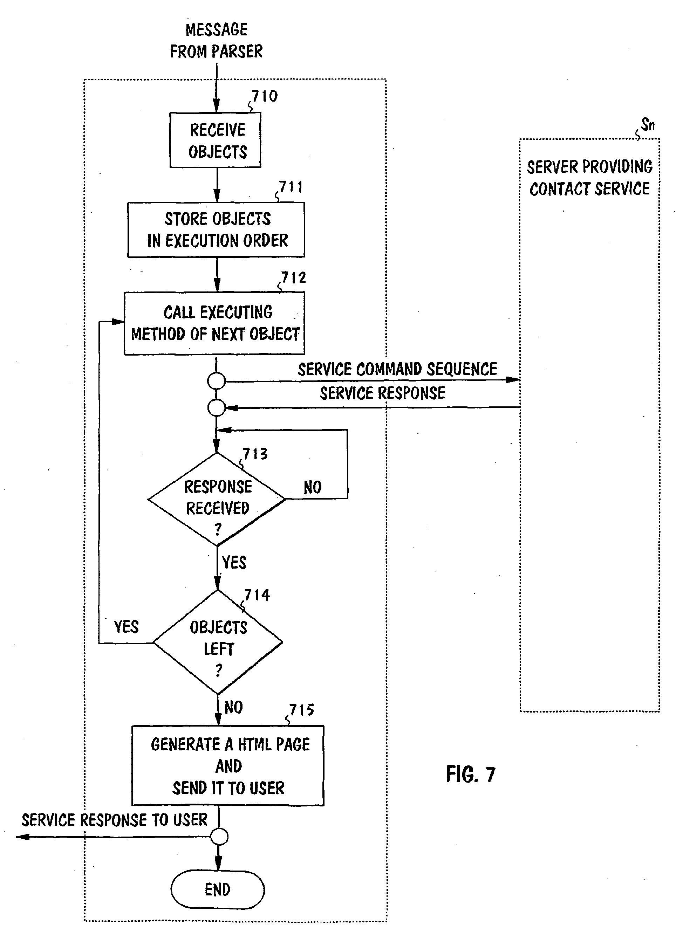

Figure 7 illustrates an example of the operation of the service logic SL when it receives a parsed response from the XML parser. The left side of the figure shows the operation of the service logic in a flow diagram format. The circles in the flow diagram illustrate the points at which messages are sent to the network. Having received the objects from the parser (step 710), the service logic SL stores them in the order of execution (step 711). After this, the service logic SL calls the execution method of the first object at step 712. Each of the classes has an execution method of its own for implementing the corresponding functionality. When this method is called, the functionality according to the class in question is executed. In other words, a service command is sent to the server providing the service in question (step 309 in Figure 2). When a response (i.e. the contact information of Jaakko Väisänen in this example) is received from the server Sn providing the contact information service (step 310 in Figure 3), the service logic SL checks if there are any objects left (step 714). If this is the case, the service logic processes the remaining objects similarly, i.e. the process returns to step 712 to call the execution method of the next object. Generally, when all methods have been executed, the service logic SL converts the responses generated from each executed object into a format compatible to the type of the user terminal. Typically, the service logic generates a HTML page on the basis of the received results and sends it to the user (step 715 in Figure 7 and step 311 in Figure 3).

In addition to the above-described straightforward execution, the functionality may require a user interaction in the middle of the above-described process. This may happen if the command object currently in execution detects that it does not have all the necessary information for the execution of its functionality, i.e. the previous objects did not produce sufficient information for complete execution of the object currently in execution. The service logic then initiates a user interaction by sending the user a message requesting additional information. The response from the user may then initiate execution of new objects before the current execution can continue. These new objects are then stored in the same storage with the objects remaining and executed before the current execution continues.

The service logic SL thus receives at least one object from the parser, the object including the code for the functionality indicated in the XML service description. Having received the objects together with the parameters associated with each object, the service logic SL has a complete description of the service functionality to be implemented. In other words, the service logic now has the set of objects which include the code to be executed for obtaining the desired functionality, such as retrieving the contact information of a person, as well as the parameter values to be used. Instead of returning executable binary data to the service logic, it is possible to optimize the operation of the system by sending the service logic only references (i.e. pointers) to the objects. In fact, the commercial tools which can be used for implementing the system typically operate in this way (i.e. all variables and objects are references).

To give an example of the above-described operation, the name of the class corresponding to contact information service could be "ContactSearch" and the execution method of this class "ContactSearch.execute()", for example. This execution method could yield a service command
serviceResult=ContactBook.searchContact("Jaakko Väisänen"),
i.e. it could call a contact search method of a service called ContactBook, residing in the server providing the contact information service, supplying the parameters parsed by the XML parser (i.e. FullName="Jaakko Väisänen") in the call. In response, the "ContactSearch" class receives from the method of the ContactBook service results from which the class generates a response to the user using its own method "generateUserResponse":
userResponse=generateUserResponse(serviceResult),
where serviceResult is the contact information of Jaakko Väisänen.

This response is rendered (i.e. made compatible) to different types of user terminals by means of a service logic method "SCL.result2Terminal":
renderedUserResponse=SCL.result2Terminal(userResponse),
After this, the rendered result, which in this case is a HTML page containing the contact information of Jaakko Väisänen, is sent to the user.

In the above examples it was assumed that the natural language interpreter was able to interpret the user input, i.e. that the user input included enough information for a successful interpretation. If the input fails to include enough information or if it cannot be interpreted unambiguously, the natural language interpreter triggers an interaction in which a message informing of the situation is first sent to the service logic. The service logic then sends an interaction request to the user, i.e. the process jumps from step 303 to step 311.

As illustrated above, the system according to the present invention includes an intermediate layer between the user and the services. This layer first generates a generic format service description out of the user input and then parses this description into entities which indicate the service calls that have to be made and the parameters relating to each service call to be made. The invention allows several services to be executed on the basis of one user input, since the service logic can call several services in response to one user input. In other words, one user input is not any more tied to exactly one service, but a combination of services can be offered in response to one natural language input from the user. The combination of services provided can be an arbitrary one, depending on the content of the natural language input. Further, the service logic can process the results obtained from the separate services in a variety of ways. This also enables an efficient way of generating new, tailored services from existing services.

The type attributes of the XML elements can also be mapped directly to service calls, without using the above-described classes. An implementation like this, in which the parser outputs service calls which correspond to the type attributes found by the parser, is in practice feasible for simple functionalities only. If the functionalities are more complicated, requiring a user interaction, for example, the above-described implementation using the classes is preferable. This is due to the fact that the implementation of the above-mentioned user interaction requires the user state handling which is unreasonable to implement without the above-described classes. Furthermore, providing service combinations by using service responses as input information for other services, as well as monitoring the state of the user session can be implemented in a more general and controlled manner if the classes are used in the above-described manner.

The services can be integrated into the system in many ways. Generally, a service belonging to the service framework can be any content providing module, such as a service application or a database. Service applications can be utilized either by using a service programming interface with any compatible programming language or by using any service user interface described by a generalized description language, such as WIDL (Web Interface Description Language) which is an application of XML. Thus, service applications can also be utilized by using an XML description of the user interface. Different kinds of adapters can be implemented for service integration.

Although the invention was described above with reference to the examples shown in the appended drawings, it is obvious that the invention is not limited to these, but it may be modified by those skilled in the art without departing from the scope of the invention, which is defined by the appended claims.

## Claims

1. A method for providing a wide variety of different services and arbitrary combinations of services in a communications network with at least one application server (S1, S2) storing service applications, each service application being assigned an operation by which the service application is started, and user terminals (UT1, UT2) for supplying service requests in natural language, the method including the step of:
- giving a user service request in natural language (301), **characterized by** the further steps of:
- interpreting (303) the user service request and generating a generic format service description on the basis of said interpretation, the service description being in generalized markup language, the service description including the names of the functionalities that are needed to fulfill the user service request and the parameters which the said functionalities require,
- receiving (601) the generic format service description,
- dividing (611) the generic format service description in one or more elements, an element including a said name of a functionality as a type and the values of the associated parameters,
- parsing (306) the elements and examining (612) the type of the element and mapping (613) said type to an entity, the entities indicating the service calls to be made and the parameters relating to the service calls for implementing the functionalities specified in the generic format service description, and
- using said entities for utilizing said service applications (309).

2. A method according to claim 1, **characterized in that** the parsing step further includes:
- mapping (613) the said elements into classes that implement said utilizing of service applications , and
- creating objects from the said classes.

3. A method according to claim 2, **characterized in that** the performing step includes executing the said objects with said parameter values.

4. A method according to claim 1, **characterized in that** the generating step includes generating an XML format service description.

5. A method according to claim 1, **characterized in that** the interpreting step includes using a network of software agents.

6. A method according to claim 1, **characterized in that** the parsing step includes parsing the service description into XML elements.

7. A method according to claim 2, **characterized in that** the creating step includes instantiating the classes that implement said utilizing of service applications.

8. A method according to claim 3, **characterized in that** the executing step includes calling the execution method of each object identified in the parsing step.

9. A method according to claim 1, **characterized by** further including the step of initiating an interaction with the sender of the service request.

10. A service delivery system, for delivering a wide variety of different services and arbitrary combinations of services to users of a communications network, the system comprising:
- at least one application server (S1, S2) storing service applications, each service application being assigned an operation by which the service application is started, and
- user terminals for supplying service requests in natural language, **characterized in that** the system further comprises:
- interpretation means (NLI) for interpreting a said user service request in natural language and generating a generic format service description on the basis of said interpretation, the service description being in generalized markup language, the service description including the names of the functionalities that are needed to fulfill the user service request and the parameters which the said functionalities require,
- parsing means (PS), responsive to the interpretation means, including means for receiving the generic format service description from the interpretation means, dividing the generic format service description in one or more elements, an element including a said name of a functionality as a type and the values of the associated parameters, and for each element parsing the element and examining the type of the element and mapping said type to an entity, the entities indicating the service calls to be made and the parameters relating to the service calls for implementing the functionalities specified in the generic format service description, and
- execution means (SL), responsive to the parsing means, using said entities for utilizing said service applications.

11. A system according to claim 10, **characterized in that** the interpretation means include a network of software agents.

12. A system according to claim 11, **characterized in that** the network is adapted to generate an XML format service description in response to a service request.

13. A system according to claim 10, **characterized in that** the parsing means include a means adapted to map said elements into classes that implement said utilizing of service applications, and create objects from said classes.

14. A system according to claim 13, **characterized in that** the execution means are adapted to call the execution method of each object class created by the parsing means.

15. A system according to claim 10, **characterized in that** the execution means include means for initiating an interaction with user terminals (UT1, UT2).

## Patentansprüche

1. Ein Verfahren zur Bereitstellung einer grossen Vielfalt von verschiedenen Diensten sowie von beliebigen Kombinationen von Diensten in einem Kommunikationsnetzwerk mit mindestens einem Anwendungsserver (S1, S2) zur Speicherung von Dienstanwendungen, wobei jede Dienstanwendung eine Operation zugewiesen bekommt, mittels welcher die Dienstanwendung gestartet wird, und Anwenderstationen (UT1, UT2) für die Zuführung von Dienstanfragen in natürlicher Sprache, wobei das Verfahren den Schritt
- der Eingabe einer Dienstanfrage in natürlicher Sprache (301) umfasst,
**gekennzeichnet durch** die weiteren Schritte:
- Übersetzung (303) der Dienstanfrage des Anwenders und der Erzeugung einer generischen Beschreibung des Dienstformates auf der Grundlage der Übersetzung, wobei die Beschreibung des Dienstes in verallgemeinerter Markup-Programmiersprache erfolgt und wobei die Dienstbeschreibung die Namen der Funktionalitäten einschliesst, welche zur Ausführung der Dienstanfrage des Anwenders erforderlich sind sowie die Parameter, welche diese Funktionalitäten benötigen,
- Empfangen (601) der Dienstbeschreibung in generischem Format,
- Aufteilung (611) der Dientsbeschreibung im generischen Format in ein Element oder in mehrere Elemente, wobei ein Element einen genannten Namen einer Funktionalität als Typus sowie die Werte der damit verbundenen Parameter einschliesst,
- Parsing (306) der Elemente und Untersuchung (612) des Typus des Elementes und Kartierung (613) dieses Typus zu einer Einheit, wobei die Einheiten die durchzuführenden Dienstanfragen sowie die Parameter bezüglich der Dienstanfragen zur Umsetzung der in der Dienstbeschreibung in generischem Format spezifizierten Funktionalitäten angeben, und
- Verwendung der Elemente zur Benützung der Dienstanwendungen (309).

2. Ein Verfahren gemäss Anspruch 1, **dadurch gekennzeichnet, dass** der Parsingschritt ferner einschliesst:
- Kartierung (613) der Elemente in Klassen, welche die Benützung der Dienstanwendungen durchführen, und
- Erzeugung von Objekten aus diesen Klassen.

3. Ein Verfahren gemäss Anspruch 2, **dadurch gekennzeichnet, dass** der Durchführungsschritt eine Ausführung der genannten Objekte mit den genannten Parameterwerten einschliesst.

4. Ein Verfahren gemäss Anspruch 1, **dadurch gekennzeichnet, dass** der Erzeugungsschritt eine Erzeugung einer Dienstbeschreibung im XML,-Format einschliesst.

5. Ein Verfahren gemäss Anspruch 1, **dadurch gekennzeichnet, dass** der Übersetzungsschritt eine Verwendung eines Netzwerks von Softwareagenten einschliesst.

6. Ein Verfahren gemäss Anspruch 1, **dadurch gekennzeichnet, dass** der Parsingschritt ein Parsing der Dienstbeschreibung in XML-Elemente einschliesst.

7. Ein Verfahren gemäss Anspruch 2, **dadurch gekennzeichnet, dass** der Erzeugungsschritt eine Partikularisierung der Klassen, welche die Funktionalitäten durchführen, einschliesst.

8. Ein Verfahren gemäss Anspruch 3, **dadurch gekennzeichnet, dass** der Ausführungsschritt ein Abrufen des Ausführungsverfahrens von jedem im Parsingschritt identifizierten Objektes einschliesst.

9. Ein Verfahren gemäss Anspruch 1, **dadurch gekennzeichnet, dass** dieses ferner einen Schritt des Auslösens einer Wechselwirkung mit dem Absender der Dienstanfrage einschliesst.

10. Ein System zur Dienstbereitstellung, zur Bereitstellung einer grossen Vielfalt von verschiedenen Diensten und beliebigen Kombinationen von Diensten für Benützer von einem Kommunikationsnetzwerk, wobei das System
- mindestens einen Anwendungsserver (S1, S2) aufweist, welcher Dienstanwendungen speichert, wobei jede Dienstanwendung eine Operation zugewiesen bekommt, mittels welcher die Dienstanwendung gestartet wird, und
- Anwenderstationen für die Zuführung von Dienstanfragen in natürlicher Sprache
aufweist,
**dadurch gekennzeichnet, dass** das System ferner
- Übersetzungsmittel (NLI) für die Übersetzung einer genannten Dienstanfrage in natürlicher Sprache und für die Erzeugung einer Dienstbeschreibung in generischem Format auf der Grundlage dieser Übersetzung, wobei die Dienstbeschreibung in verallgemeinerter Markup-Programmiersprache erfolgt und wobei die Dienstbeschreibung die Namen der Funktionalitäten enthält, welche erforderlich sind, um die Dienstanfrage des Anwenders durchzuführen sowie die Parameter, welche diese Funktionalitäten benötigen,
- Parsingmittel (PS), welche auf die Übersetzungsmittel reagieren, einschliesslich von Mitteln zum Empfangen der Dienstbeschreibung in generischem Format von den Übersetzungsmitteln, zum Aufteilen der Dienstbeschreibung in generischem Format in ein Element oder in mehrere Elemente, wobei ein Element einen genannten Namen einer Funktionalität als einen Typus sowie die Werte der damit verbundenen Parameter enthält, und für jedes Element zum Parsing des Elementes und zum Untersuchen des Typus des Elementes sowie zur Kartierung des Typus zu einer Einheit, wobei die Einheiten die durchzuführenden Dienstanfragen und die Parameter bezüglich der Dienstanfragen für die Umsetzung der in der Dienstbeschreibung in generischem Format spezifizierten Funktionalitäten angeben, und
- Ausführungsmittel (SL), welche auf die Parsingmittel reagieren und diese Einheiten für die Benützung dieser Dienstanwendungen verwenden,
aufweist.

11. Ein System gemäss Anspruch 10, **dadurch gekennzeichnet, dass** die Übersetzungsmittel ein Netzwerk von Softwareagenten einschliessen.

12. Ein System gemäss Anspruch 11, **dadurch gekennzeichnet, dass** das Netzwerk dazu ausgelegt ist, eine Dienstbeschreibung im XML-Format als Reaktion auf eine Dienstanfrage zu erzeugen.

13. Ein System gemäss Anspruch 10, **dadurch gekennzeichnet, dass** die Parsingmittel ein Mittel einschliessen, dass dazu ausgelegt ist, die Elemente in Klassen zu kartieren, welche die Verwendung der Dienstanwendungen durchführen, und welche aus diesen Klassen Objekte erzeugen.

14. Ein System gemäss Anspruch 13, **dadurch gekennzeichnet, dass** die Ausführungsmittel dazu ausgelegt sind, das Ausführungsverfahren von jeder durch die Parsingmittel erzeugten Objektklasse abzurufen.

15. Ein System gemäss Anspruch 10, **dadurch gekennzeichnet, dass** die Ausführungsmittel Mittel für die Auslösung einer Wechselwirkung mit Anwenderstationen (UT1, UT2) einschliessen.

## Revendications

1. Procédé destiné à fournir une grande diversité de services différents et des combinaisons arbitraires de services dans un réseau de communications avec au moins un serveur d'applications (S1, S2) mémorisant des applications de services, chaque application de service se voyant attribuer une opération par laquelle l'application de service est lancée, et des terminaux d'utilisateurs (UT1, UT2) destinés à fournir des demandes de services en langage naturel, le procédé comprenant l'étape consistant à
- fournir une requête de service d'utilisateur en langage naturel (301),
**caractérisé par** les étapes supplémentaires consistant à
- interpréter (303) la requête de service d'utilisateur et générer une description de service, au format générique, sur la base de ladite interprétation, la description de service étant sous forme de langage de balisage généralisé, la description de service incluant les noms des fonctionnalités qui sont nécessaires pour satisfaire la requête de service d'utilisateur et les paramètres que nécessitent lesdites fonctionnalités,
- recevoir (601) la description de service au format générique,
- diviser (611) la description de service au format générique en un ou plusieurs éléments, un élément comprenant un dit nom d'une fonctionnalité en tant que type et les valeurs des paramètres associés,
- analyser (306) les éléments et examiner (612) le type de l'élément et mapper (613) ledit type en une entité, les entités indiquant les appels de service à réaliser et les paramètres relatifs auxdits appels de service pour réaliser les fonctionnalités spécifiées dans la description de service au format générique, et
- utiliser lesdites entités pour utiliser lesdites applications de service (309).

2. Procédé selon la revendication 1, **caractérisé en ce que** l'étape d'analyse comprend en outre
- le mappage (613) desdits éléments en classes qui réalisent ladite utilisation des applications de service, et
- la création des objets à partir desdites classes.

3. Procédé selon la revendication 2, **caractérisé en ce que** l'étape d'exécution comprend l'exécution desdits objets avec lesdites valeurs de paramètres.

4. Procédé selon la revendication 1, **caractérisé en ce que** l'étape de génération comprend la génération d'une description de service au format XML.

5. Procédé selon la revendication 1, **caractérisé en ce que** l'étape d'interprétation comprend l'utilisation d'un réseau d'agents logiciels.

6. Procédé selon la revendication 1, **caractérisé en ce que** l'étape d'analyse comprend l'analyse de la description de service en éléments au format XML.

7. Procédé selon la revendication 2, **caractérisé en ce que** l'étape de création comprend l'instanciation des classes qui réalisent ladite utilisation des applications de service.

8. Procédé selon la revendication 3, **caractérisé en ce que** l'étape d'exécution comprend l'appel du procédé d'exécution de chaque objet identifié au cours de l'étape d'analyse.

9. Procédé selon la revendication 1, **caractérisé en ce qu'**il inclut en outre l'étape consistant à initier une interaction avec l'émetteur de la requête de service.

10. Système de délivrance de service destiné à délivrer une grande diversité de services différents et des combinaisons arbitraires de services à des utilisateurs d'un réseau de communication, le système comprenant
- au moins un serveur d'application (S1, S2) mémorisant des applications de service, chaque application de service se voyant attribuer une opération par laquelle l'application de service est lancée, et
- des terminaux d'utilisateurs destinés à fournir des requêtes de service en langage naturel,
**caractérisé en ce que** le système comprend en outre
- un moyen d'interprétation (NLI) destiné à interpréter une dite requête de service en langage naturel et à générer une description de service au format générique sur la base de ladite interprétation, la description de service étant sous forme de langage de balisage généralisé, la description de service comprenant les noms des fonctionnalités de service qui sont nécessaires pour satisfaire la requête de service d'utilisateur et les paramètres que nécessitent lesdites fonctionnalités,
- un moyen d'analyse (PS) répondant au moyen d'interprétation, comprenant un moyen pour recevoir la description de service au format générique du moyen d'interprétation, diviser la description de service au format générique en un ou plusieurs éléments, un élément comprenant un dit nom d'une fonctionnalité en tant que type et les valeurs des paramètres associés, et pour chaque élément, analyser l'élément et examiner le type d'élément et mapper ledit type en une entité, les entités indiquant les appels de service à réaliser et les paramètres relatifs auxdits appels de service pour réaliser les fonctionnalités spécifiées dans la description de service au format générique, et
- un moyen d'exécution (SL) répondant au moyen d'analyse destiné à utiliser lesdits éléments pour utiliser lesdites applications de service.

11. Système selon la revendication 10, **caractérisé en ce que** le moyen d'interprétation comprend un réseau d'agents logiciels.

12. Système selon la revendication 11, **caractérisé en ce que** le réseau est adapté pour générer une description de service au format XML en réponse à une requête de service.

13. Système selon la revendication 10, **caractérisé en ce que** le moyen d'analyse comprend un moyen adapté pour
mapper lesdits éléments en classes qui réalisent ladite utilisation d'applications de service, et
créer des objets à partir desdites classes.

14. Système selon la revendication 13, **caractérisé en ce que** les moyens d'exécution sont adaptés pour appeler le procédé d'exécution de chaque classe d'objet créée par le moyen d'analyse.

15. Système selon la revendication 10, **caractérisé en ce que** les moyens d'exécution comprennent un moyen destiné à initier une interaction avec des terminaux d'utilisateurs (UT1, UT2).
